# EUROPEAN PATENT APPLICATION

(11) **EP 4 629 460 A1**
(43) Date of publication of application: **08.10.2025**
(21) Application number: 25165661.7
(22) Date of filing: 24.03.2025
(51) Int. Cl.: H02J 1/10, H02J 7/14

(54) **POWER SUPPLY SYSTEM, MOVING OBJECT, AND METHOD OF CONTROLLING POWER SUPPLY SYSTEM**

(30) Priority: 26.03.2024 JP 2024049327
(71) Applicant: HONDA MOTOR CO., LTD., Tokyo 105-8404 (JP)
(72) Inventor: MITANI, Manabu, Saitama, 351-0193 (JP); NAKANO, Minato, Saitama, 351-0193 (JP)
(74) Representative: Weickmann & Weickmann PartmbB

(57) **Abstract**

In the case that an electrical power output from an external charging device (46) is required to be supplied to a first electrical power storage device (26a) and a second electrical power storage device (26b), and a difference between a voltage of the first electrical power supply circuit and a voltage of the second electrical power supply circuit is greater than or equal to a predetermined first voltage threshold value, then an electrical power supply system (21) connects the first electrical power supply circuit and the second electrical power supply circuit after executing a precharging control in which the first electrical power storage device is charged by the electrical power output from the first electrical power generating device, and the second electrical power storage device is charged by the electrical power output from the second electrical power generating device.

## Description

### BACKGROUND OF THE INVENTION

### FIELD OF THE INVENTION

The present disclosure relates to an electrical power supply system, a moving object, and a method of controlling an electrical power supply system.

### DESCRIPTION OF THE RELATED ART

In JP 2022-529997 A, an aircraft electrical energy supply network (electrical power supply system) is disclosed.

### SUMMARY OF THE INVENTION

There is a demand for a more satisfactory electrical power supply system, a more satisfactory moving object including such an electrical power supply system, and a method of more satisfactorily controlling such an electrical power supply system.

The present invention has the object of solving the aforementioned problem.

A first aspect of the present disclosure is characterized by An electrical power supply system, including a first electrical power supply circuit configured to supply to a first load device an electrical power output from a first electrical power generating device, the electrical power being a direct current electrical power, a first electrical power storage device connected to the first electrical power supply circuit and in parallel with the first electrical power generating device, a second electrical power supply circuit configured to supply to a second load device an electrical power output from a second electrical power generating device, the electrical power being a direct current electrical power, a second electrical power storage device connected to the second electrical power supply circuit and in parallel with the second electrical power generating device, a connection circuit equipped with a connection device configured to connect the first electrical power supply circuit and the second electrical power supply circuit, a charging circuit configured to connect the first electrical power supply circuit and a charging port to which an external charging device is connected, and a control device configured to execute a connection control on the connection device in order to connect the first electrical power supply circuit and the second electrical power supply circuit via the connection circuit, wherein, in a case that an electrical power output from the external charging device is required to be supplied to the first electrical power storage device and the second electrical power storage device, and a difference between a voltage of the first electrical power supply circuit and a voltage of the second electrical power supply circuit is greater than or equal to a predetermined first voltage threshold value, the control device executes the connection control on the connection device after executing a precharging control on the first electrical power generating device and the second electrical power generating device, the precharging control being a control in which the first electrical power storage device is charged by the electrical power output from the first electrical power generating device and the second electrical power storage device is charged by the electrical power output from the second electrical power generating device.

A second aspect of the present disclosure is characterized by a moving object including the electrical power supply system according to the first aspect.

A third aspect of the present disclosure is characterized by a method of controlling an electrical power supply system, the electrical power supply system including a first electrical power supply circuit configured to supply to a first load device an electrical power output from a first electrical power generating device, the electrical power being a direct current electrical power, a first electrical power storage device connected to the first electrical power supply circuit and in parallel with the first electrical power generating device, a second electrical power supply circuit configured to supply to a second load device an electrical power output from a second electrical power generating device, the electrical power being a direct current electrical power, a second electrical power storage device connected to the second electrical power supply circuit and in parallel with the second electrical power generating device, a connection circuit equipped with a connection device configured to connect the first electrical power supply circuit and the second electrical power supply circuit, and a charging circuit configured to connect the first electrical power supply circuit and a charging port to which an external charging device is connected, the method including in a case that an electrical power output from the external charging device is required to be supplied to the first electrical power storage device and the second electrical power storage device, and a difference between a voltage of the first electrical power supply circuit and a voltage of the second electrical power supply circuit is greater than or equal to a predetermined first voltage threshold value, executing a charging control, as a precharging control, on the first electrical power generating device and the second electrical power generating device, the precharging control being a control in which the first electrical power storage device is charged by the electrical power output from the first electrical power generating device and the second electrical power storage device is charged by the electrical power output from the second electrical power generating device, in the case that the electrical power output from the external charging device is required to be supplied to the first electrical power storage device and the second electrical power storage device, and the difference between the voltage of the first electrical power supply circuit and the voltage of the second electrical power supply circuit is greater than or equal to the predetermined first voltage threshold value, executing a connection control on the connection device after executing the precharging control, or in a case that the electrical power output from the external charging device is required to be supplied to the first electrical power storage device and the second electrical power storage device, and the difference between the voltage of the first electrical power supply circuit and the voltage of the second electrical power supply circuit is less than the predetermined first voltage threshold value, executing the connection control on the connection device without executing the precharging control, the connection control being a control for connecting the first electrical power supply circuit and the second electrical power supply circuit via the connection circuit, and executing an external charging control to supply the electrical power output from the external charging device to the first electrical power storage device and the second electrical power storage device.

According to the present invention, it is possible to provide a more satisfactory electrical power supply system, a more satisfactory moving object including such an electrical power supply system, and a method of more satisfactorily controlling such an electrical power supply system.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic diagram of a moving object according to one embodiment;
FIG. 2 is a schematic diagram of the electrical power supply system according to the one embodiment;
FIG. 3 is a diagram showing operations of the electrical power supply system of a flight phase according to the one embodiment;
FIG. 4 is a diagram showing operations of the electrical power supply system of a charging preparatory phase according to the one embodiment;
FIG. 5 is a diagram showing operations of the electrical power supply system of the charging preparatory phase according to the one embodiment;
FIG. 6 is a diagram showing operations of the electrical power supply system of a charging phase according to the one embodiment;
FIG. 7 is a diagram showing operations of the electrical power supply system of a charging phase according to the one embodiment;
FIG. 8 is a diagram showing operations of the electrical power supply system of a charging completion phase according to the one embodiment;
FIG. 9 is a diagram showing operations of the electrical power supply system of the charging completion phase according to the one embodiment;
FIG. 10 is a diagram showing operations of the electrical power supply system of the charging completion phase according to the one embodiment;
FIG. 11 is a control block diagram of a control device according to the one embodiment;
FIG. 12 is a flowchart illustrating an external charging process executed by the control device according to the one embodiment;
FIG. 13A and FIG. 13B are graphs showing changes over time in a state of the electrical power supply system in periods before and after a point in time when the first electrical power supply subsystem and a second electrical power supply subsystem are connected;
FIG. 14A and FIG. 14B are graphs showing changes over time in a state of the electrical power supply system in periods before and after a point in time when the first electrical power supply subsystem and a second electrical power supply subsystem are connected; and
FIG. 15 is a schematic diagram showing an electrical power supply system according to a Comparative Example.

### DETAILED DESCRIPTION OF THE INVENTION

Conventionally, an electrical power supply system, which is equipped with two electrical power supply systems made of a first electrical power supply subsystem and a second electrical power supply subsystem, has been proposed as an electrical power supply subsystem that is mounted on an electric vertical takeoff and landing aircraft (eVTOL aircraft).

The first electrical power supply subsystem is a system that supplies electrical power to a first load device, and is equipped with a first electrical power generating device, which is a main electrical power source, a first storage device, which is an auxiliary electrical power source, and a first electrical power supply circuit, which supplies electrical power from the first electrical power generating device to the first load device. The second electrical power supply subsystem is a system that supplies electrical power to a second load device, and is equipped with a second electrical power generating device, which is a main electrical power source, a second storage device, which is an auxiliary electrical power source, and a second electrical power supply circuit, which supplies electrical power from the second electrical power generating device to the second load device.

Normally, the first electrical power supply subsystem and the second electrical power supply subsystem are independent of each other, and an influence of a malfunction that occurs in one of the first electrical power supply subsystem or the second electrical power supply subsystem does not affect the other. However, for example, in the case that a state occurs in which electrical power cannot be supplied from the first electrical power generating device to the first load device, the first electrical power supply subsystem and the second electrical power supply subsystem can be connected, and thereby can supply the electrical power from the second electrical power generating device to the first load device.

The electrical power supply system is equipped with a charging port to which an external charging device is connected.

After the eVTOL has landed, in preparation for a subsequent flight, the first electrical power storage device and the second electrical power storage device are charged from an external charging device.

Although it may be considered to provide a charging port with respect to each of the first electrical power supply subsystem and the second electrical power supply subsystem, from the standpoint of reducing the weight and manufacturing costs of the electrical power supply system, it is preferable to reduce the number of the charging ports provided in the electrical power supply system.

In order to reduce the number of the charging ports, it may be considered to provide a common charging port with respect to the first electrical power supply subsystem and the second electrical power supply subsystem, and at the time of charging, to connect the first electrical power supply subsystem and the second electrical power supply subsystem. However, when the first electrical power supply subsystem and the second electrical power supply subsystem are connected, in the case that the difference between the voltage of the first electrical power supply subsystem and the voltage of the second electrical power supply subsystem is relatively large, there is a concern that an excessive current (excessive electrical current, or overcurrent) may flow in the electrical power supply system.

According to the present disclosure, when the first electrical power supply circuit and the second electrical power supply circuit are connected at the time of charging, it is possible to suppress an excessive current from flowing to the electrical power supply system. Hereinafter, a description will be given concerning the electrical power supply system of the present disclosure.

### [Embodiments]

### [Configuration of Moving object]

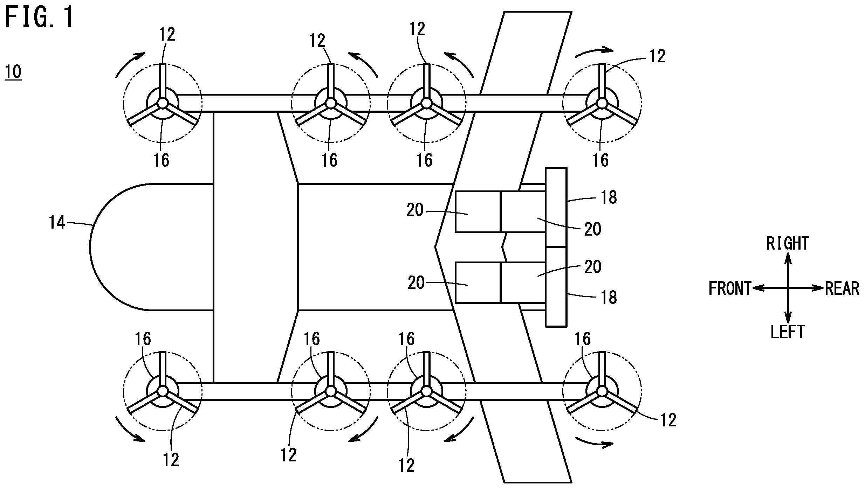

FIG. 1 is a schematic diagram of a moving object 10 according to one embodiment. The moving object 10 of the one embodiment is an electric vertical takeoff and landing aircraft (eVTOL aircraft). The moving object 10 is equipped with eight VTOL rotors 12. The VTOL rotors 12 generate an upwardly directed thrust with respect to a fuselage 14. The moving object 10 is equipped with eight electric motors 16. One of the electric motors 16 drives one of the VTOL rotors 12. The moving object 10 includes two cruise rotors 18. The cruise rotors 18 generate a forwardly directed thrust with respect to the fuselage 14. The moving object 10 is equipped with four electric motors 20. Two of the electric motors 20 drive one of the cruise rotors 18.

An electrical power supply system 21 of the one embodiment is mounted on the moving object 10. The moving object 10 on which the electrical power supply system 21 is mounted is not limited to being an aircraft, but may be a ship, an automobile, a train, or the like.

### [Configuration of Electrical Power Supply System]

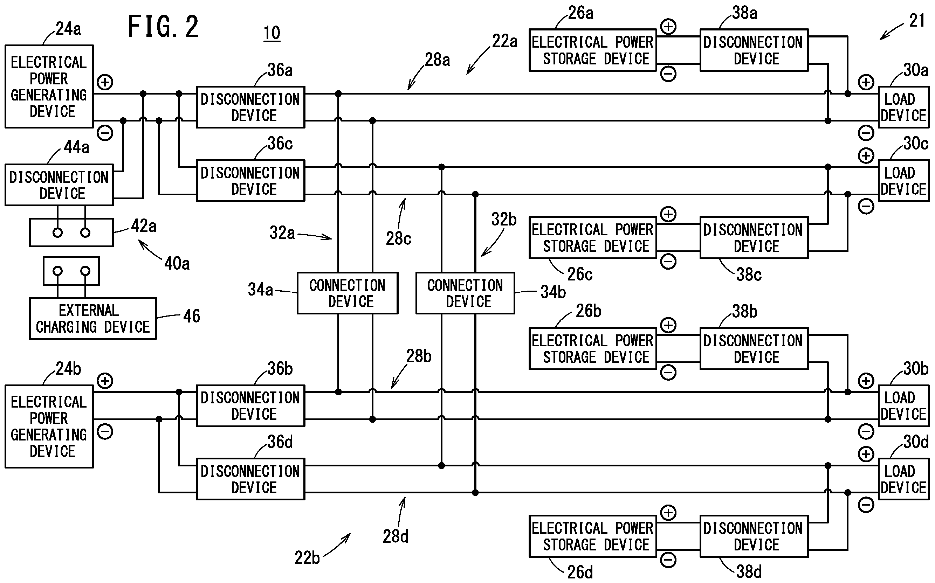

FIG. 2 is a schematic diagram of the electrical power supply system 21 according to the one embodiment. The electrical power supply system 21 is equipped with a first electrical power supply subsystem 22a and a second electrical power supply subsystem 22b. The first electrical power supply subsystem 22a is equipped with a first electrical power generating device 24a serving as a main electrical power source, and a first electrical power storage device 26a and a third electrical power storage device 26c serving as auxiliary electrical power sources. The second electrical power supply subsystem 22b is equipped with a second electrical power generating device 24b serving as a main electrical power source, and a second electrical power storage device 26b and a fourth electrical power storage device 26d serving as auxiliary electrical power sources.

The first electrical power supply subsystem 22a is equipped with a first electrical power supply circuit 28a and a third electrical power supply circuit 28c. The first electrical power supply circuit 28a supplies a DC electrical power output from the first electrical power generating device 24a to a first load device 30a. The third electrical power supply circuit 28c supplies a DC electrical power output from the first electrical power generating device 24a to a third load device 30c.

The second electrical power supply subsystem 22b is equipped with a second electrical power supply circuit 28b and a fourth electrical power supply circuit 28d. The second electrical power supply circuit 28b supplies a DC electrical power output from the second electrical power generating device 24b to a second load device 30b. The fourth electrical power supply circuit 28d supplies the DC electrical power output from the second electrical power generating device 24b to a fourth load device 30d.

The first electrical power generating device 24a and the second electrical power generating device 24b each include an engine (internal combustion engine), an electrical power generator, and a power control unit, none of which is shown. The electrical power generator is driven by the engine, and thereby generates a three-phase AC electrical power. The power control unit converts the three-phase AC electrical power into a DC electrical power.

The first electrical power generating device 24a and the second electrical power conversion device 24b may also include various sensors such as a voltage sensor and a current sensor, and various elements such as fuses, relays, breakers, diodes, transistors, resistors, coils, capacitors, or the like.

Each of the first load device 30a, the second load device 30b, the third load device 30c, and the fourth load device 30d may be equipped with two of the electric motors 16 and one of the electric motors 20, respectively. Further, each of the first load device 30a, the second load device 30b, the third load device 30c, and the fourth load device 30d is equipped with a non-illustrated inverter. The inverter converts an input DC electrical power into a three-phase AC electrical power, and the electric motors 16 and the electric motors 20 are driven by the three-phase AC electrical power.

Each of the first load device 30a, the second load device 30b, the third load device 30c, and the fourth load device 30d may include a DC/DC converter and a low voltage drive device, neither of which is illustrated. The DC/DC converter causes the voltage of the input DC electrical power to be lowered, and the low voltage drive device is driven by the DC electrical power with the lowered voltage.

The first load device 30a, the second load device 30b, the third load device 30c, and the fourth load device 30d may also include various sensors such as voltage sensors and current sensors or the like, and various elements such as fuses, relays, breakers, diodes, transistors, resistors, coils, capacitors, or the like.

The electrical power supply system 21 is equipped with connection circuits 32a and 32b. The connection circuit 32a is equipped with a connection device 34a that is capable of connecting the first electrical power supply circuit 28a and the second electrical power supply circuit 28b. The connection circuit 32b is equipped with a connection device 34b that is capable of connecting the third electrical power supply circuit 28c and the fourth electrical power supply circuit 28d.

The connection device 34a and the connection device 34b each include a contactor. The connection device 34a and the connection device 34b may include a relay. The connection device 34a and the connection device 34b may include a breaker. The connection device 34a and the connection device 34b may include a semiconductor switch.

Normally, the first electrical power supply circuit 28a and the second electrical power supply circuit 28b are disconnected by the connection device 34a, and the third electrical power supply circuit 28c and the fourth electrical power supply circuit 28d are disconnected by the connection device 34b. In accordance with this feature, the first electrical power supply subsystem 22a and the second electrical power supply subsystem 22b are mutually independent of each other. Consequently, in the case that an abnormality has occurred in one of the first electrical power supply subsystem 22a or the second electrical power supply subsystem 22b, it is possible to prevent the abnormality from adversely influencing the other one. For example, even if a short circuit occurs in the first electrical power supply subsystem 22a, and the first load device 30a and the third load device 30c become incapable of being started, operation of the second load device 30b and the fourth load device 30d of the second electrical power supply subsystem 22b can continue.

However, for example, in the case that the first electrical power generating device 24a stops or the like, and it has become impossible to supply electrical power from the first electrical power generating device 24a to the first load device 30a and the third load device 30c, the first electrical power supply circuit 28a and the second electrical power supply circuit 28b are connected by the connection device 34a, and the third electrical power supply circuit 28c and the fourth electrical power supply circuit 28d are connected by the connection device 34b. In accordance with this feature, the electrical power is supplied from the second electrical power generating device 24b to the first electrical power supply circuit 28a and the third electrical power supply circuit 28c.

The electrical power supply system 21 is equipped with disconnection devices 36a to 36d. The disconnection device 36a is capable of disconnecting the first electrical power generating device 24a from the first electrical power supply circuit 28a and the connection circuit 32a. The disconnection device 36b is capable of disconnecting the second electrical power generating device 24b from the second electrical power supply circuit 28b and the connection circuit 32a. The disconnection device 36c is capable of disconnecting the first electrical power generating device 24a from the third electrical power supply circuit 28c and the connection circuit 32b. The disconnection device 36d is capable of disconnecting the second electrical power generating device 24b from the fourth electrical power supply circuit 28d and the connection circuit 32b.

The disconnection devices 36a to 36d each include a contactor. The disconnection devices 36a to 36d may each include a relay. The disconnection devices 36a to 36d may each include a breaker. The disconnection devices 36a to 36d may each include a semiconductor switch.

The first electrical power storage device 26a is connected to the first electrical power supply circuit 28a and in parallel with the first electrical power generating device 24a. The second electrical power storage device 26b is connected to the second electrical power supply circuit 28b and in parallel with the second electrical power generating device 24b. The third electrical power storage device 26c is connected to the third electrical power supply circuit 28c and in parallel with the first electrical power generating device 24a. The fourth electrical power storage device 26d is connected to the fourth electrical power supply circuit 28d and in parallel with the second electrical power generating device 24b.

The first electrical power storage device 26a, the second electrical power storage device 26b, the third electrical power storage device 26c, and the fourth electrical power storage device 26d each include a lithium ion battery. The first electrical power storage device 26a, the second electrical power storage device 26b, the third electrical power storage device 26c, and the fourth electrical power storage device 26d may each include a secondary battery other than a lithium ion battery. The first electrical power storage device 26a, the second electrical power storage device 26b, the third electrical power storage device 26c, and the fourth electrical power storage device 26d may each include a large-capacity capacitor.

The first electrical power storage device 26a, the second electrical power storage device 26b, the third electrical power storage device 26c, and the fourth electrical power storage device 26d may also include various sensors such as voltage sensors and current sensors or the like, and various elements such as fuses, relays, breakers, diodes, transistors, resistors, coils, capacitors, or the like.

The electrical power supply system 21 is equipped with disconnection devices 38a to 38d. The disconnection device 38a is capable of disconnecting the first electrical power storage device 26a from the first electrical power supply circuit 28a and the first load device 30a. The disconnection device 38b is capable of disconnecting the second electrical power storage device 26b from the second electrical power supply circuit 28b and the second load device 30b. The disconnection device 38c is capable of disconnecting the third electrical power storage device 26c from the third electrical power supply circuit 28c and the third load device 30c. The disconnection device 38d is capable of disconnecting the fourth electrical power storage device 26d from the fourth electrical power supply circuit 28d and the fourth load device 30d.

The disconnection devices 38a to 38d each include a contactor. The disconnection devices 38a to 38d may each include a relay. The disconnection devices 38a to 38d may each include a breaker. The disconnection devices 38a to 38d may each include a semiconductor switch.

As shown in FIG. 2, the first load device 30a and the third load device 30c are connected in parallel. Further, the first electrical power generating device 24a and the first electrical power storage device 26a are connected in parallel. Further, the first electrical power generating device 24a and the third electrical power storage device 26c are connected in parallel. Therefore, if it is considered that a drop in voltage in the first electrical power supply circuit 28a and the third electrical power supply circuit 28c is sufficiently small, the output voltage of the first electrical power generating device 24a, the output voltage of the first electrical power storage device 26a, the output voltage of the third electrical power storage device 26c, the applied voltage of the first load device 30a, and the applied voltage of the third load device 30c are approximately equal. Hereinafter, the output voltage of the first electrical power generating device 24a, the output voltage of the first electrical power storage device 26a, the output voltage of the third electrical power storage device 26c, the applied voltage of the first load device 30a, and the applied voltage of the third load device 30c may be collectively referred to as the voltage of the first electrical power supply subsystem 22a.

Similarly, the output voltage of the second electrical power generating device 24b, the output voltage of the second electrical power storage device 26b, the output voltage of the fourth electrical power storage device 26d, the applied voltage of the second load device 30b, and the applied voltage of the fourth load device 30d are approximately equal. Hereinafter, the output voltage of the second electrical power generating device 24b, the output voltage of the second electrical power storage device 26b, the output voltage of the fourth electrical power storage device 26d, the applied voltage of the second load device 30b, and the applied voltage of the fourth load device 30d may be collectively referred to as the voltage of the second electrical power supply subsystem 22b.

The electrical power supply system 21 is equipped with a charging circuit 40a in the first electrical power supply subsystem 22a. The charging circuit 40a includes a disconnection device 44a that is capable of connecting a charging port 42a to the first electrical power supply circuit 28a and the third electrical power supply circuit 28c. An external charging device 46 is connected to the charging port 42a.

### [Operations of Electrical Power Supply System]

After the moving object 10 has landed, the external charging device 46 is attached to the electrical power supply system 21, and charging of the first electrical power storage device 26a, the second electrical power storage device 26b, the third electrical power storage device 26c, and the fourth electrical power storage device 26d is carried out by the electrical power supplied from the external charging device 46. Hereinafter, operations of the electrical power supply system 21 prior to and after charging from the external charging device 46 is carried out will be described in four phases, namely, a flight phase, a charging preparatory phase, a charging phase, and a charging completion phase.

### (Flight Phase)

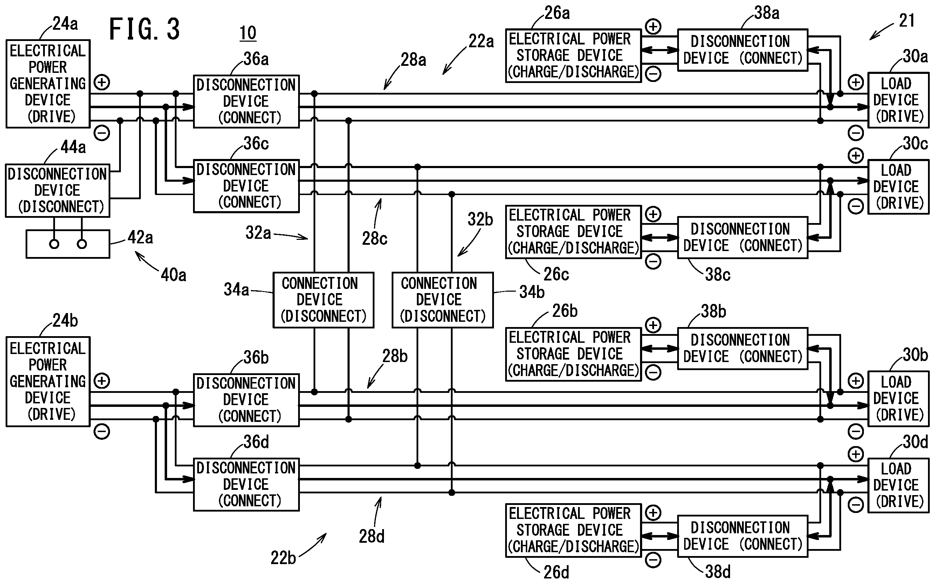

FIG. 3 is a diagram showing operations of the electrical power supply system 21 of the flight phase in the one embodiment. The arrows shown in FIG. 3 indicate electrical power supply pathways.

While the moving object 10 is in flight, as shown in FIG. 3, a connection between the first electrical power supply circuit 28a and the second electrical power supply circuit 28b is disconnected by the connection device 34a, and a connection between the third electrical power supply circuit 28c and the fourth electrical power supply circuit 28d is disconnected by the connection device 34b.

The first electrical power generating device 24a is connected to the first electrical power supply circuit 28a and the connection circuit 32a by the disconnection device 36a, and the first electrical power generating device 24a is connected to the third electrical power supply circuit 28c and the connection circuit 32b by the disconnection device 36c. In accordance with this feature, electrical power is supplied from the first electrical power generating device 24a to the first load device 30a and the third load device 30c.

The first electrical power storage device 26a is connected by the disconnection device 38a to the first load device 30a, and the third electrical power storage device 26c is connected by the disconnection device 38c to the third load device 30c. In the case that the output electrical power of the first electrical power generating device 24a is insufficient with respect to the sum of the required electrical power of the first load device 30a and the required power of the third load device 30c, such an insufficient electrical power is supplied from the first electrical power storage device 26a to the first load device 30a, and such an insufficient electrical power is supplied from the third electrical power storage device 26c to the third load device 30c. In the case that the output electrical power of the first electrical power generating device 24a exceeds the sum of the electrical power required by the first load device 30a and the electrical power required by the third load device 30c, the first electrical power storage device 26a and the third electrical power storage device 26c are subjected to charging by such a surplus electrical power.

The second electrical power generating device 24b is connected to the second electrical power supply circuit 28b and the connection circuit 32a by the disconnection device 36b, and the second electrical power generating device 24b is connected to the fourth electrical power supply circuit 28d and the connection circuit 32b by the disconnection device 36d. In accordance with this feature, electrical power is supplied from the second electrical power generating device 24b of the second load device 30b and the fourth load device 30d.

The second electrical power storage device 26b is connected by the disconnection device 38b to the second load device 30b, and the fourth electrical power storage device 26d is connected by the disconnection device 38d to the fourth load device 30d. In the case that the output electrical power of the second electrical power generating device 24b is insufficient with respect to the sum of the required electrical power of the second load device 30b and the required power of the fourth load device 30d, such an insufficient electrical power is supplied from the second electrical power storage device 26b to the second load device 30b, and such an insufficient electrical power is supplied from the fourth electrical power storage device 26d to the fourth load device 30d. In the case that the output electrical power of the second electrical power generating device 24b exceeds the sum of the electrical power required by the second load device 30b and the electrical power required by the fourth load device 30d, the second electrical power storage device 26b and the fourth electrical power storage device 26d are subjected to charging by such a surplus electrical power.

### (Charging Preparatory Phase)

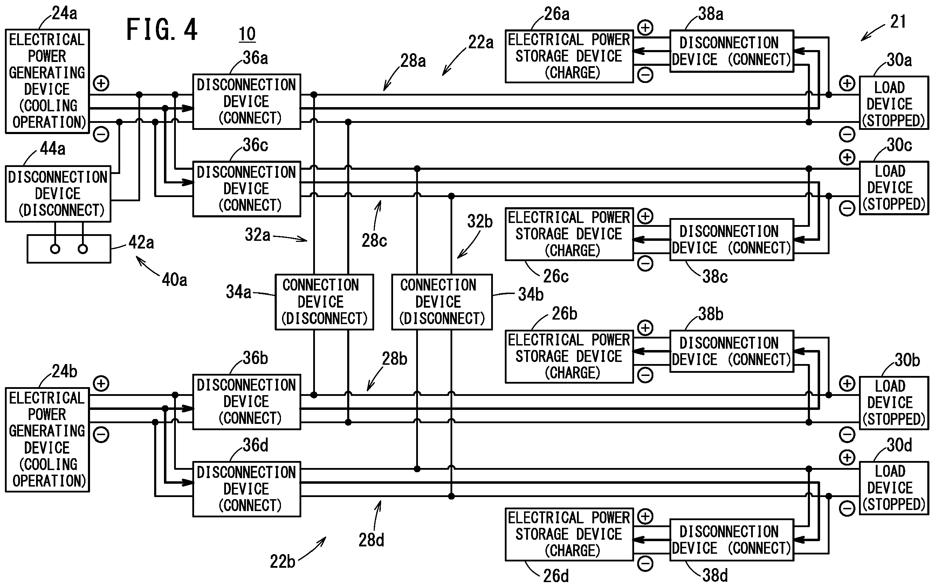

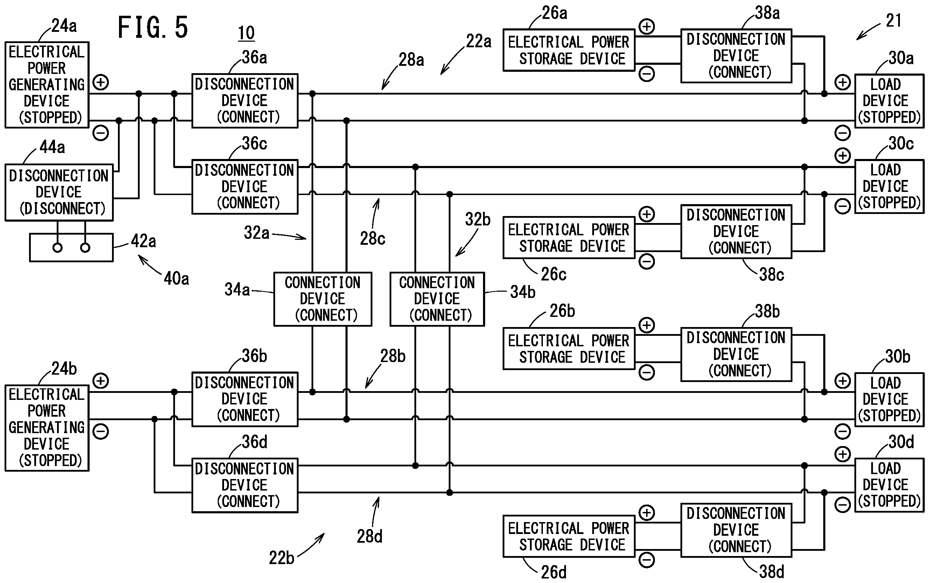

FIG. 4 and FIG. 5 are diagrams showing operations of the electrical power supply system 21 of a charging preparatory phase according to the one embodiment. FIG. 4 shows operations of the electrical power supply system 21 in a state in which the moving object 10 is carrying out precharging after having landed. FIG. 5 shows operations of the electrical power supply system 21 when the first electrical power supply subsystem 22a and the second electrical power supply subsystem 22b are connected. The arrows shown in FIG. 4 indicate electrical power supply pathways.

After the moving object 10 has landed, the first electrical power generating device 24a and the second electrical power generating device 24b do not immediately stop operating, but rather, for a while, a cooling operation is performed that causes the first electrical power generating device 24a and the second electrical power generating device 24b to be cooled. In the case that the cooling operation is performed, each of the engines of the first electrical power generating device 24a and the second electrical power generating device 24b are controlled to be placed in an idling state. In such an idling state, the output speed of the engines is less than or equal to a predetermined speed, and the output power of the engines is less than or equal to a predetermined power.

After the moving object 10 has landed, as shown in FIG. 4, the first electrical power storage device 26a and the third electrical power storage device 26c are precharged by the output electrical power of the first electrical power generating device 24a, and the second electrical power storage device 26b and the fourth electrical power storage device 26d are precharged by the output electrical power of the second electrical power generating device 24b. The precharging is performed in order to make the voltage of the first electrical power supply subsystem 22a and the voltage of the second electrical power supply subsystem 22b approximate one another. Concerning the voltage of the first electrical power supply subsystem 22a and the voltage of the second electrical power supply subsystem 22b being made to approximate one another, a detailed description thereof will be given later.

The precharging is carried out by the electrical power that is output when the first electrical power generating device 24a and the second electrical power generating device 24b are undergoing a cooling operation. The precharging is carried out until the difference between the voltage of the first electrical power supply subsystem 22a and the voltage of the second electrical power supply subsystem 22b becomes less than or equal to a predetermined voltage threshold value.

After the precharging is completed, the first electrical power generating device 24a and the second electrical power generating device 24b are stopped, and the connection between the first electrical power supply subsystem 22a and the second electrical power supply subsystem 22b is carried out. As shown in FIG. 5, the first electrical power supply circuit 28a and the second electrical power supply circuit 28b are connected, via the connection circuit 32a, by the connection device 34a, and the third electrical power supply circuit 28c and the fourth electrical power supply circuit 28d are connected, via the connection circuit 32b, by the connection device 34b. In accordance with this feature, the preparation for charging is completed.

### (Charging Phase)

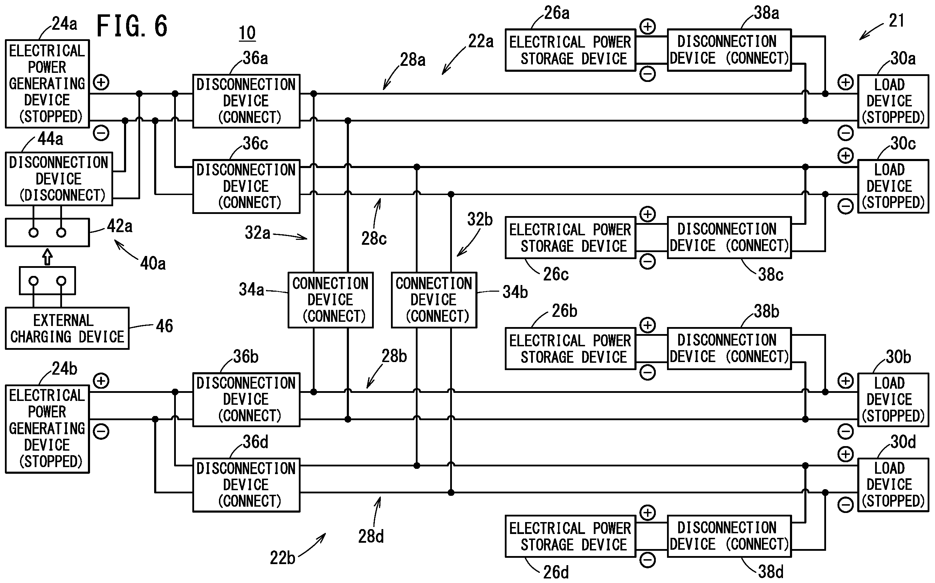

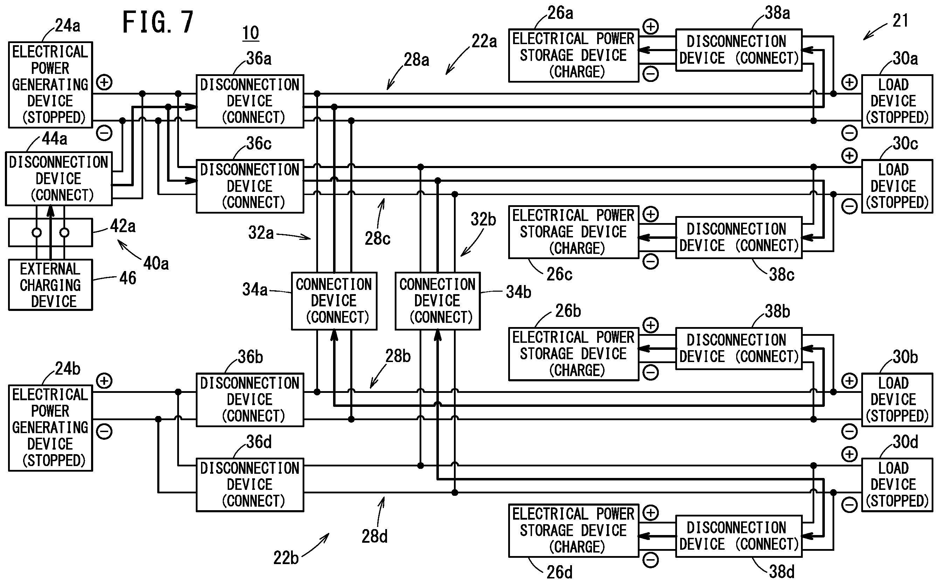

FIG. 6 and FIG. 7 are diagrams showing operations of the electrical power supply system 21 of a charging phase according to the one embodiment. FIG. 6 shows operations of the electrical power supply system 21 when the external charging device 46 is attached thereto. FIG. 7 shows operations of the electrical power supply system 21 during charging.

After the preparation for charging is completed, then as shown in FIG. 6, the external charging device 46 is attached to the charging port 42a. At this stage, the connection between the first electrical power supply circuit 28a and the second electrical power supply circuit 28b and the charging port 42a is disconnected by the disconnection device 44a.

After the external charging device 46 has been attached to the charging port 42a, as shown in FIG. 7, the first electrical power supply circuit 28a and the second electrical power supply circuit 28b are connected by the disconnection device 44a to the charging port 42a. In accordance with this feature, the output electrical power of the external charging device 46 is supplied, via the charging circuit 40a and the first electrical power supply circuit 28a, to the first electrical power storage device 26a, and thereby the charging of the first electrical power storage device 26a is carried out. Further, the output electrical power of the external charging device 46 is supplied, via the charging circuit 40a, the first electrical power supply circuit 28a, the connection circuit 32a, and the second electrical power supply circuit 28b, to the second electrical power storage device 26b, and thereby the charging of the second electrical power storage device 26b is carried out. Further, the output electrical power of the external charging device 46 is supplied, via the charging circuit 40a and the third electrical power supply circuit 28c, to the third electrical power storage device 26c, and thereby the charging of the third electrical power storage device 26c is carried out. Further, the output electrical power of the external charging device 46 is supplied, via the charging circuit 40a, the third electrical power supply circuit 28c, the connection circuit 32b, and the fourth electrical power supply circuit 28d, to the fourth electrical power storage device 26d, and thereby the charging of the fourth electrical power storage device 26d is carried out.

### (Charging Completion Phase)

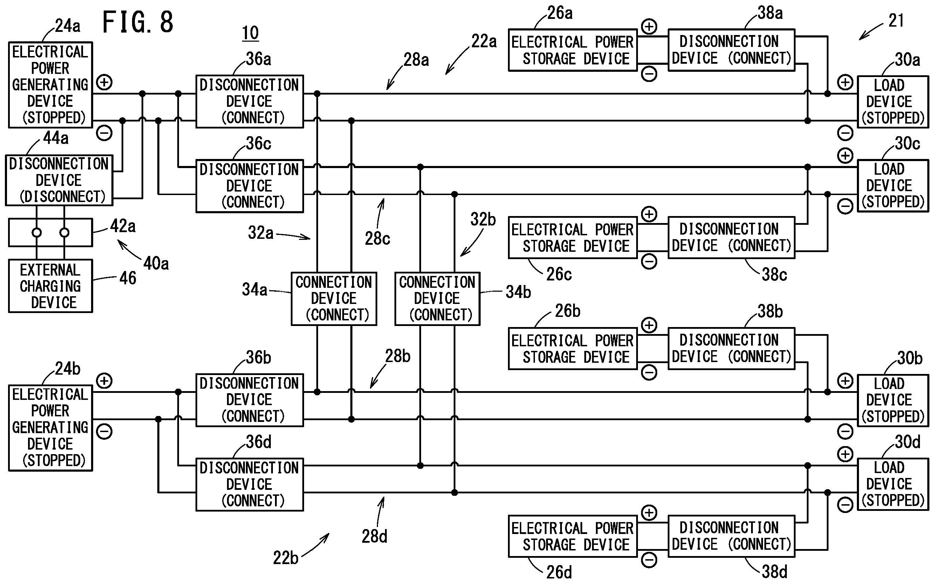

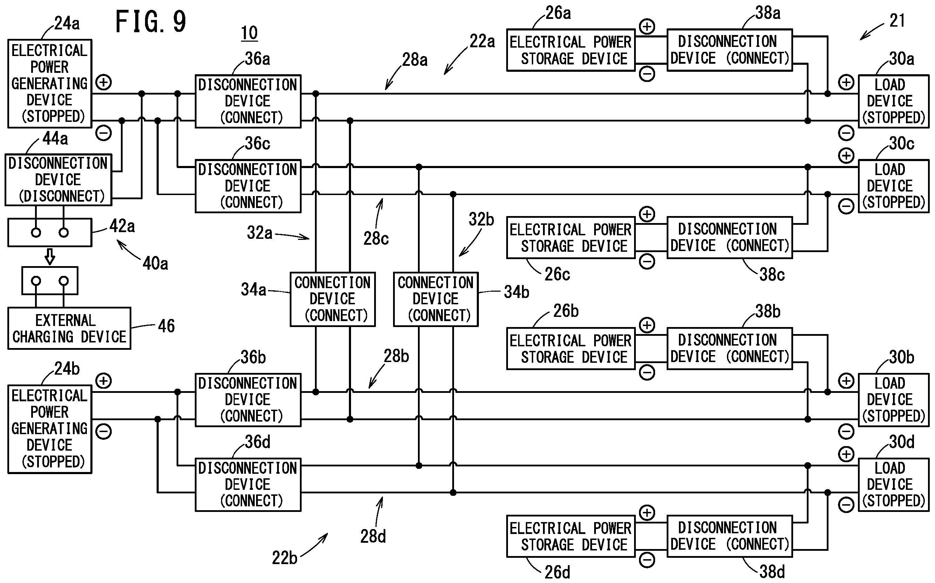

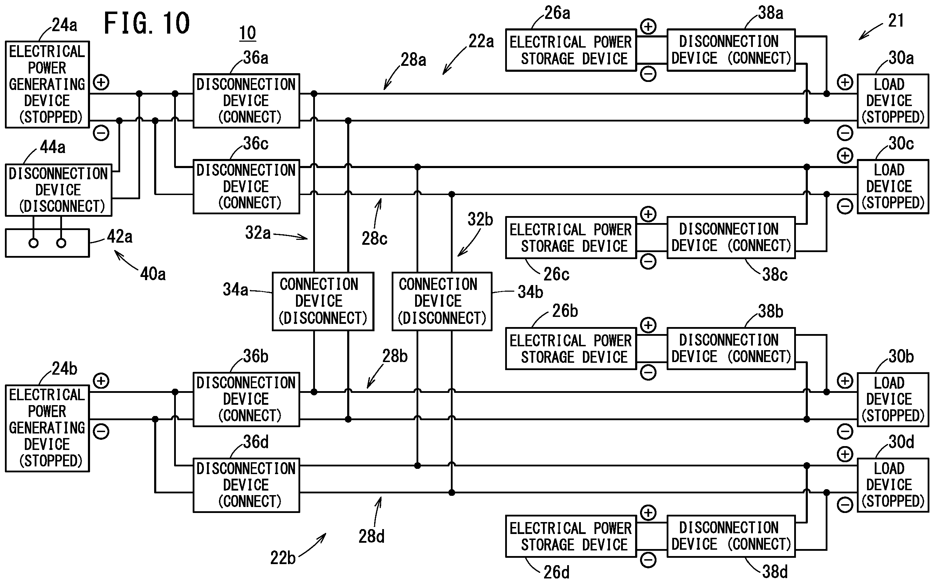

FIGS. 8 to 10 are diagrams illustrating operations of the electrical power supply system 21 of a charging completion phase in the one embodiment. FIG. 8 shows operations of the electrical power supply system 21 at a time of charging completion. FIG. 9 shows operations of the electrical power supply system 21 when the external charging device 46 is removed. FIG. 10 shows operations of the electrical power supply system 21 in a starting standby state.

In the case that the amount of the stored electrical power of the first electrical power storage device 26a becomes greater than or equal to a first predetermined amount of electrical power, and further, the amount of the stored electrical power of the second electrical power storage device 26b becomes greater than or equal to a second predetermined amount of electrical power, and further, the amount of the stored electrical power of the third electrical power storage device 26c becomes greater than or equal to a third predetermined amount of electrical power, and further, the amount of stored electrical power of the fourth electrical power storage device 26d becomes greater than or equal to a fourth predetermined amount of electrical power, then as shown in FIG. 8, the connection between the first electrical power supply circuit 28a and the second electrical power supply circuit 28b, and the charging port 42a is disconnected by the disconnection device 44a. The first predetermined amount of electrical power, the second predetermined amount of electrical power, the third predetermined amount of electrical power, and the fourth predetermined amount of electrical power may be the same amount of electrical power, or may be different amounts of electrical power.

After the first electrical power supply circuit 28a and the second electrical power supply circuit 28b have been disconnected from the charging port 42a, then as shown in FIG. 9, the external charging device 46 is removed from the charging port 42a.

After the external charging device 46 has been removed from the charging port 42a, as shown in FIG. 10, the connection between the first electrical power supply circuit 28a and the second electrical power supply circuit 28b is disconnected by the connection device 34a, and the connection between the third electrical power supply circuit 28c and the fourth electrical power supply circuit 28d is disconnected by the connection device 34b. In accordance with this feature, the first electrical power supply subsystem 22a and the second electrical power supply subsystem 22b become placed in a state of being independent of each other.

As noted previously, concurrently with the charging by the external charging device 46, preparations for a subsequent flight, such as refueling of fuel or the like in the moving object 10, are carried out. After preparations for the flight have been completed, the first electrical power generating device 24a and the second electrical power generating device 24b are restarted.

### [Configuration of Control Device]

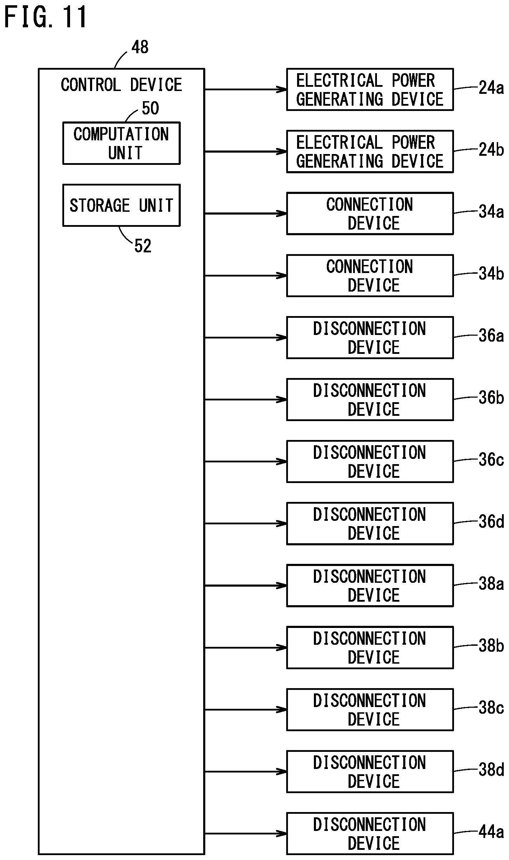

The electrical power supply system 21 is equipped with a control device 48. FIG. 11 is a control block diagram of the control device 48 according to the one embodiment.

The control device 48 includes a computation unit 50 and a storage unit 52. The computation unit 50 is a processor such as a CPU (Central Processing Unit) or a GPU (Graphics Processing Unit) or the like. The computation unit 50 controls each of respective devices by executing a program that is stored in the storage unit 52. At least a portion of the computation unit 50 may be realized by an integrated circuit such as an ASIC (Application Specific Integrated Circuit) or an FPGA (Field-Programmable Gate Array) or the like. At least a portion of the computation unit 50 may be realized by an electronic circuit including a discrete device.

The storage unit 52 is constituted by a volatile memory and a non-volatile memory, which are computer readable storage media. The volatile memory, for example, is a RAM (Random Access Memory) or the like. The nonvolatile memory, for example, is a ROM (Read Only Memory), a flash memory, or the like. Data and the like are stored, for example, in the volatile memory. A program, a table, a map and the like are stored, for example, in the nonvolatile memory. At least a portion of the storage unit 52 may be provided in the above-described processor, the integrated circuit, or the like.

The control device 48 controls the first electrical power generating device 24a, the second electrical power generating device 24b, the connection devices 34a and 34b, the disconnection devices 36a to 36d, the disconnection devices 38a to 38d, and the disconnection device 44a. The first electrical power generating device 24a, the second electrical power generating device 24b, the connection devices 34a and 34b, the disconnection devices 36a to 36d, the disconnection devices 38a to 38d, and the disconnection device 44a may be controlled by a plurality of the control devices 48. For example, the first electrical power generating device 24a and the second electrical power generating device 24b may be controlled by one of the control devices 48, and the connection devices 34a and 34b, the disconnection devices 36a to 36d, the disconnection devices 38a to 38d, and the disconnection device 44a may be controlled by another one of the control devices 48.

### [External Charging Process]

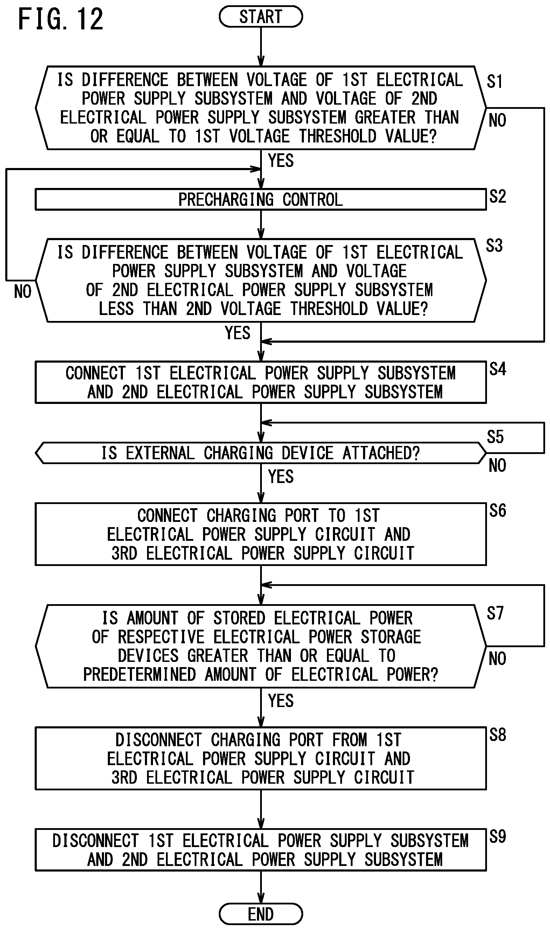

FIG. 12 is a flowchart illustrating an external charging process executed by the control device 48 according to the one embodiment. The external charging process is executed when the moving object 10 has landed, and the first electrical power generating device 24a and the second electrical power generating device 24b are carrying out the cooling operation.

In step S1, the control device 48 determines whether or not the difference between the voltage of the first electrical power supply subsystem 22a and the voltage of the second electrical power supply subsystem 22b is greater than or equal to a first voltage threshold value. In the case it is determined that the difference between the voltage of the first electrical power supply subsystem 22a and the voltage of the second electrical power supply subsystem 22b is greater than or equal to the first voltage threshold value (step S1: YES), the process transitions to step S2.

In step S2, the control device 48 executes a precharging control on the first electrical power generating device 24a and the second electrical power generating device 24b. In accordance with this feature, the first electrical power storage device 26a and the third electrical power storage device 26c are charged by the electrical power output from the first electrical power generating device 24a during the cooling operation. Further, the second electrical power storage device 26b and the fourth electrical power storage device 26d are charged with the electrical power output from the second electrical power generating device 24b during the cooling operation.

In step S3, the control device 48 determines whether or not the difference between the voltage of the first electrical power supply subsystem 22a and the voltage of the second electrical power supply subsystem 22b is less than a second voltage threshold value. In the case it is determined that the difference between the voltage of the first electrical power supply subsystem 22a and the voltage of the second electrical power supply subsystem 22b is greater than or equal to the second voltage threshold value (step S3: NO), the process transitions to step S2. The second voltage threshold value may be equal to the first voltage threshold value, or may be different from the first voltage threshold value.

In step S3, in the case it is determined that the difference in voltage between the first electrical power supply subsystem 22a and the second electrical power supply subsystem 22b is less than the second voltage threshold value (step S3: YES), or alternatively, in step S1, in the case it is determined that the difference in voltage between the first electrical power supply subsystem 22a and the second electrical power supply subsystem 22b is less than the first voltage threshold value (step S1: NO), the process transitions to step S4.

In step S4, the control device 48 executes a connection control with respect to each of the connection device 34a and the connection device 34b. In accordance with this feature, the first electrical power supply circuit 28a and the second electrical power supply circuit 28b are connected via the connection circuit 32a, and the third electrical power supply circuit 28c and the fourth electrical power supply circuit 28d are connected via the connection circuit 32b. Therefore, the first electrical power supply subsystem 22a and the second electrical power supply subsystem 22b are connected.

In step S5, the control device 48 determines whether or not the external charging device 46 is attached to the charging port 42a. In the case it is determined that the external charging device 46 is not attached to the charging port 42a (step S5: NO), the process of step S5 is repeated. In the case it is determined that the external charging device 46 is attached to the charging port 42a (step S5: YES), the process transitions to step S6.

In step S6, the control device 48 controls the disconnection device 44a, and thereby connects the charging port 42a to the first electrical power supply circuit 28a and the third electrical power supply circuit 28c.

In step S7, it is determined whether or not the amount of the stored electrical power of the first electrical power storage device 26a is greater than or equal to a first predetermined amount of electrical power, and further, the amount of stored electrical power of the second electrical power storage device 26b is greater than or equal to a second predetermined amount of electrical power, and further, the amount of the stored electrical power of the third electrical power storage device 26c is greater than or equal to a third predetermined amount of electrical power, and further, the amount of the stored electrical power of the fourth electrical power storage device 26d is greater than or equal to a fourth predetermined amount of electrical power.

In the case it is determined that the amount of the stored electrical power of the first electrical power storage device 26a is less than the first predetermined amount of electrical power, or alternatively, the amount of the stored electrical power of the second electrical power storage device 26b is less than the second predetermined amount of electrical power, or alternatively, the amount of the stored electrical power of the third electrical power storage device 26c is less than the third predetermined amount of electrical power, or alternatively, the amount of the stored electrical power of the fourth electrical power storage device 26d is less than the fourth predetermined amount of electrical power (step S7: NO), the process of step S7 is repeated.

In the case it is determined that the amount of the stored electrical power of the first electrical power storage device 26a is greater than or equal to the first predetermined amount of electrical power, and further, the amount of the stored electrical power of the second electrical power storage device 26b is greater than or equal to the second predetermined amount of electrical power, and further, the amount of the stored electrical power of the third electrical power storage device 26c is greater than or equal to the third predetermined amount of electrical power, and further, the amount of the stored electrical power of the fourth electrical power storage device 26d is greater than or equal to the fourth predetermined amount of electrical power (step S7: YES), the process transitions to step S8.

In step S8, the control device 48 controls the disconnection device 44a, and thereby disconnects the charging port 42a from the first electrical power supply circuit 28a and the third electrical power supply circuit 28c. Thereafter, the process transitions to step S9. The process of step S8 may be executed prior to the process of step S7.

In step S9, the control device 48 terminates the connection control with respect to each of the connection device 34a and the connection device 34b. In accordance with this feature, the first electrical power supply circuit 28a and the second electrical power supply circuit 28b are disconnected, and the third electrical power supply circuit 28c and the fourth electrical power supply circuit 28d are disconnected. Therefore, the connection of the first electrical power supply subsystem 22a and the second electrical power supply subsystem 22b is disconnected. Thereafter, the external charging process comes to an end.

### [Concerning Approximation of Voltage of First Electrical Power Supply Subsystem and Voltage of Second Electrical Power Supply Subsystem]

In the one embodiment of the electrical power supply system 21, after the moving object 10 has landed, in the case that there is a difference between the voltage of the first electrical power supply subsystem 22a and the voltage of the second electrical power supply subsystem 22b, then prior to the first electrical power supply subsystem 22a and the second electrical power supply subsystem 22b being connected, the voltage of the first electrical power supply subsystem 22a and the voltage of the second electrical power supply subsystem 22b are made to approximate one another. The approximation of the voltage of the first electrical power supply subsystem 22a and the voltage of the second electrical power supply subsystem 22b is carried out by the precharging that is executed prior to the charging by the external charging device 46.

In a state in which there is a difference in voltage between the voltage of the first electrical power supply subsystem 22a and the voltage of the second electrical power supply subsystem 22b, concerning the state of the electrical power supply system 21 in the case that the first electrical power supply subsystem 22a and the second electrical power supply subsystem 22b are connected, a description thereof will be provided below.

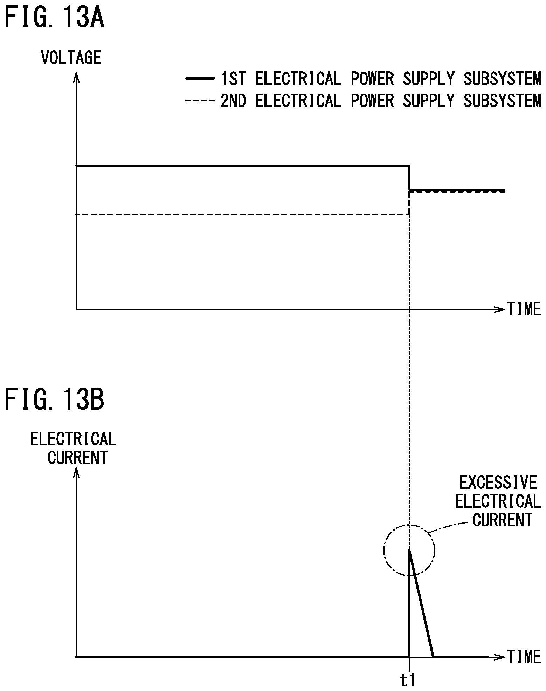

FIG. 13A and FIG. 13B are graphs showing changes over time in a state of the electrical power supply system 21 in periods before and after a point in time when the first electrical power supply subsystem 22a and the second electrical power supply subsystem 22b are connected. The graph of FIG. 13A shows a change over time of the voltage of the first electrical power supply subsystem 22a and a change over time of the voltage of the second electrical power supply subsystem 22b. The graph of FIG. 13B shows a change over time of the electrical current flowing through the connection circuit 32a and the connection circuit 32b. In each of the graphs of FIG. 13A and FIG. 13B, the changes over time of the voltage and the electrical current are shown schematically.

At time t1, the first electrical power supply circuit 28a and the second electrical power supply circuit 28b are connected, and together therewith, the third electrical power supply circuit 28c and the fourth electrical power supply circuit 28d are connected. For example, as shown in FIG. 13A, in the case that, at time t1, there is a difference between the voltage of the first electrical power supply subsystem 22a and the voltage of the second electrical power supply subsystem 22b, then when the first electrical power supply circuit 28a and the second electrical power supply circuit 28b are connected, and the third electrical power supply circuit 28c and the fourth electrical power supply circuit 28d are connected, an excessive current will flow in the electrical power supply system 21. Due to such an excessive current, there is a concern that the respective equipment and the respective devices of the electrical power supply system 21 may incur damage. Further, in the case that each of the equipment and each of the devices of the electrical power supply system 21 is designed to withstand the excessive current, a problem arises in that the manufacturing cost of the electrical power supply system 21 increases.

After the voltage of the first electrical power supply subsystem 22a and the voltage of the second electrical power supply subsystem 22b have been made to approximate one another, concerning the state of the electrical power supply system 21 in the case that the first electrical power supply subsystem 22a and the second electrical power supply subsystem 22b are connected, a description thereof will be provided below.

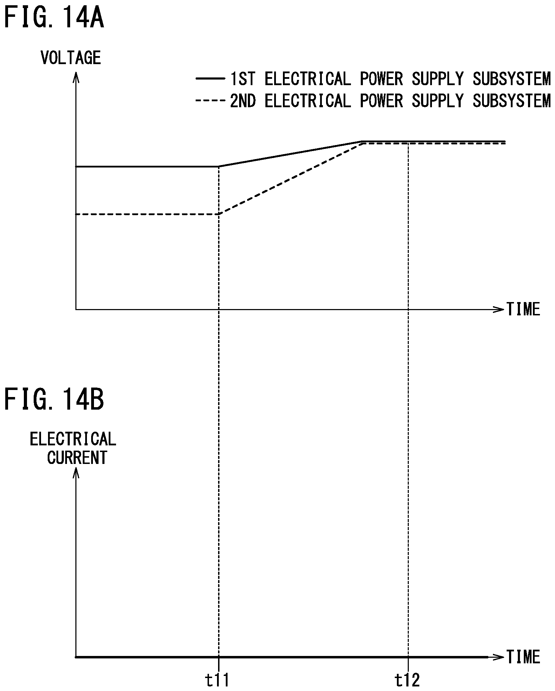

FIG. 14A and FIG. 14B are graphs showing changes over time in a state of the electrical power supply system 21 in periods before and after a point in time when the first electrical power supply subsystem 22a and the second electrical power supply subsystem 22b are connected. The graph of FIG. 14A shows a change over time of the voltage of the first electrical power supply subsystem 22a and a change over time of the voltage of the second electrical power supply subsystem 22b. The graph of FIG. 14B shows a change over time of the electrical current flowing through the connection circuit 32a and the connection circuit 32b. In each of the graphs of FIG. 14A and FIG. 14B, the changes over time of the voltage and the electrical current are shown schematically.

At time t11, the precharging control is executed with respect to each of the first electrical power generating device 24a and the second electrical power generating device 24b.

For example, as shown in FIG. 14A, at time t11, in the case that the voltage of the first electrical power supply circuit 28a is higher than the voltage of the second electrical power supply circuit 28b, the output electrical power of the first electrical power generating device 24a is made smaller than the output electrical power of the second electrical power generating device 24b. In accordance with this feature, the rate at which the SOC (State of Charge) of the second electrical power storage device 26b and the SOC of the fourth electrical power storage device 26d increase can be made faster than the rate at which the SOC of the first electrical power storage device 26a and the SOC of the third electrical power storage device 26c increase. As the SOC becomes higher, since the open circuit voltage of the battery becomes higher and the output voltage also becomes higher, the rate at which the output voltage of the second electrical power storage device 26b and the output voltage of the fourth electrical power storage device 26d increase becomes faster than the rate at which the output voltage of the first electrical power storage device 26a and the output voltage of the third electrical power storage device 26c increase. Stated otherwise, since the rate at which the voltage of the second electrical power supply subsystem 22b increases is faster than the rate at which the voltage of the first electrical power supply subsystem 22a increases, the voltage of the second electrical power supply subsystem 22b can be made closer to the voltage of the first electrical power supply subsystem 22a.

At time t12, when the difference between the voltage of the first electrical power supply subsystem 22a and the voltage of the second electrical power supply subsystem 22b has become less than or equal to the electrical power threshold value, the first electrical power supply circuit 28a and the second electrical power supply circuit 28b are connected, and the third electrical power supply circuit 28c and the fourth electrical power supply circuit 28d are connected. Therefore, it is possible to suppress an excessive electrical current from flowing in the electrical power supply system 21. Therefore, damage to the respective equipment and the respective devices of the electrical power supply system 21 is suppressed. Further, there is no need to design each of the respective equipment and the respective devices of the electrical power supply system 21 so as to be capable of withstanding an excessive current, and the manufacturing cost of the electrical power supply system 21 can be reduced.

### [Comparison with Electrical Power Supply System of Comparative Example]

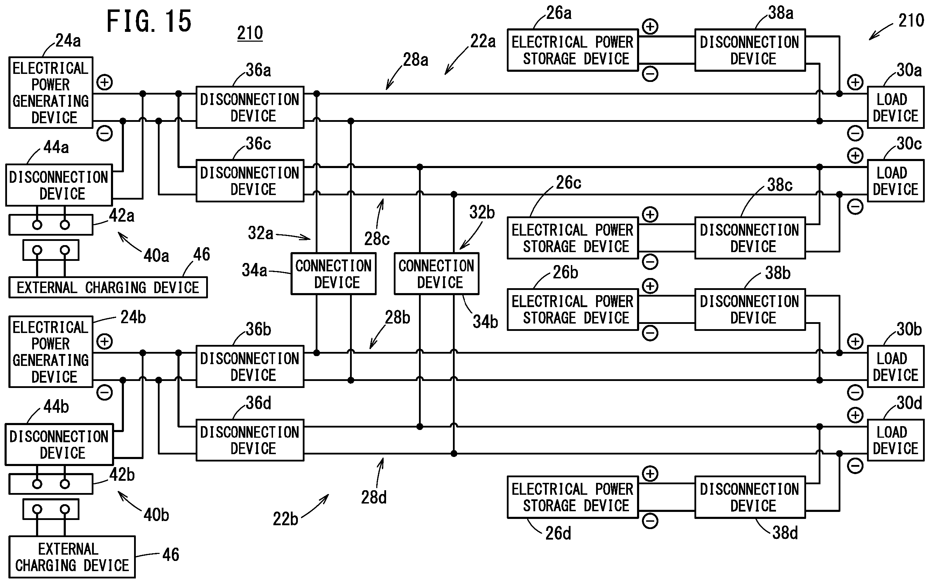

FIG. 15 is a schematic diagram showing an electrical power supply system 210 according to a comparative example. In the electrical power supply system 210 of the comparative example, the first electrical power supply subsystem 22a is equipped with the charging circuit 40a, and the second electrical power supply subsystem 22b is equipped with a charging circuit 40b. The charging circuit 40b includes a disconnection device 44b that is capable of connecting a charging port 42b to the second electrical power supply circuit 28b and the fourth electrical power supply circuit 28d. The external charging device 46 is connected to the charging port 42b.

In the comparative example, the charging port 42a is provided in the first electrical power supply subsystem 22a, and the charging port 42b is provided in the second electrical power supply subsystem 22b. In accordance with this feature, without connecting the first electrical power supply subsystem 22a and the second electrical power supply subsystem 22b, each of the first electrical power storage device 26a, the second electrical power storage device 26b, the third electrical power storage device 26c, and the fourth electrical power storage device 26d is capable of being charged by the output electrical power of the external charging device 46.

However, since two charging ports, namely, the charging port 42a and the charging port 42b, are provided in the electrical power supply system 210, a problem arises in that the number of the constituent parts that make up the electrical power supply system 210 increases, and the weight of the electrical power supply system 210 becomes heavier, and the manufacturing cost of the electrical power supply system 210 increases. In the electrical power supply system 21 of the one embodiment, since it is possible to reduce the number of the charging ports, the number of the constituent parts that make up the electrical power supply system 21 can be reduced, the electrical power supply system 21 can be made lighter in weight, and the manufacturing cost of the electrical power supply system 21 can be suppressed.

In relation to the above-described disclosure, the following supplementary notes are further disclosed.

### Supplementary Note 1

The electrical power supply system (21) according to the present disclosure includes the first electrical power supply circuit (28a) configured to supply to the first load device (30a) the electrical power output from the first electrical power generating device (24a), the electrical power being the direct current electrical power, the first electrical power storage device (26a) connected to the first electrical power supply circuit and in parallel with the first electrical power generating device, the second electrical power supply circuit (28b) configured to supply to the second load device (30b) the electrical power output from the second electrical power generating device (24b), the electrical power being the direct current electrical power, the second electrical power storage device (26b) connected to the second electrical power supply circuit and in parallel with the second electrical power generating device, the connection circuit (32a) equipped with the connection device (34a) configured to connect the first electrical power supply circuit and the second electrical power supply circuit, the charging circuit (40a) configured to connect the first electrical power supply circuit and the charging port (42a) to which the external charging device (46) is connected, and the control device (48) configured to execute the connection control on the connection device in order to connect the first electrical power supply circuit and the second electrical power supply circuit via the connection circuit, wherein, in the case that the electrical power output from the external charging device is required to be supplied to the first electrical power storage device and the second electrical power storage device, and the difference between the voltage of the first electrical power supply circuit and the voltage of the second electrical power supply circuit is greater than or equal to the predetermined first voltage threshold value, the control device executes the connection control on the connection device after executing the precharging control on the first electrical power generating device and the second electrical power generating device, the precharging control being the control in which the first electrical power storage device is charged by the electrical power output from the first electrical power generating device and the second electrical power storage device is charged by the electrical power output from the second electrical power generating device. In accordance with this feature, when the first electrical power supply circuit and the second electrical power supply circuit are connected at the time of charging, it is possible to suppress an excessive current from flowing to the electrical power supply system.

### Supplementary Note 2

In the electrical power supply system according to Supplementary Note 1, in the case that the electrical power output from the external charging device is required to be supplied to the first electrical power storage device and the second electrical power storage device, and the difference between the voltage of the first electrical power supply circuit and the voltage of the second electrical power supply circuit is greater than or equal to the predetermined first voltage threshold value, the control device may execute the connection control on the connection device after executing the precharging control on the first electrical power generating device and the second electrical power charging device until the difference between the voltage of the first electrical power supply circuit and the voltage of the second electrical power supply circuit becomes less than the predetermined second voltage threshold value. In accordance with this feature, when the first electrical power supply circuit and the second electrical power supply circuit are connected at the time of charging, it is possible to suppress an excessive current from flowing to the electrical power supply system.

### Supplementary Note 3

In the electrical power supply system according to Supplementary Note 1, each of the first electrical power generating device and the second electrical power generating device may include the electrical power generator and the internal combustion engine configured to drive the electrical power generator, and in the case that the internal combustion engine is in an idling state, the control device may execute the precharging control on the first electrical power generating device and the second electrical power generating device. In accordance with this feature, when the first electrical power supply circuit and the second electrical power supply circuit are connected at the time of charging, it is possible to suppress an excessive current from flowing to the electrical power supply system.

### Supplementary Note 4

In the electrical power supply system according to Supplementary Note 1, the charging circuit may further include the disconnection device (44a) configured to disconnect the charging port from the first electrical power supply circuit, wherein, in the case that the external charging device is not connected to the charging port, the control device may disconnect the charging port from the first electrical power supply circuit by the disconnection device. In accordance with this feature, when the first electrical power supply circuit and the second electrical power supply circuit are connected at the time of charging, it is possible to suppress an excessive current from flowing to the electrical power supply system.

### Supplementary Note 5

In the electrical power supply system according to Supplementary Note 1, the charging circuit may further include the disconnection device configured to disconnect the charging port from the first electrical power supply circuit, wherein in the case that the amount of stored electrical power of the first electrical power storage device becomes greater than or equal to the first predetermined amount of electrical power, and the amount of stored electrical power of the second electrical power storage device becomes greater than or equal to the second predetermined amount of electrical power, the control device may disconnect the charging port from the first electrical power supply circuit by the disconnection device. In accordance with this feature, when the first electrical power supply circuit and the second electrical power supply circuit are connected at the time of charging, it is possible to suppress an excessive current from flowing to the electrical power supply system.

### Supplementary Note 6

In the electrical power supply system according to Supplementary Note 1, in the case that the external charging device is detached from the charging port, the control device may terminate the connection control on the connection device. In accordance with this feature, when the first electrical power supply circuit and the second electrical power supply circuit are connected at the time of charging, it is possible to suppress an excessive current from flowing to the electrical power supply system.

### Supplementary Note 7

The moving object (10) according to the present disclosure includes the electrical power supply system according to any one of Supplementary Notes 1 to 6. In accordance with this feature, when the first electrical power supply circuit and the second electrical power supply circuit are connected at the time of charging, it is possible to suppress an excessive current from flowing to the electrical power supply system.

### Supplementary Note 8

In the method of controlling the electrical power supply system according to the present disclosure, the system including the first electrical power supply circuit configured to supply to the first load device an electrical power output from the first electrical power generating device, the electrical power being the direct current electrical power, the first electrical power storage device connected to the first electrical power supply circuit and in parallel with the first electrical power generating device, the second electrical power supply circuit configured to supply to the second load device the electrical power output from a second electrical power generating device, the electrical power being the direct current electrical power, the second electrical power storage device connected to the second electrical power supply circuit and in parallel with the second electrical power generating device, the connection circuit equipped with the connection device configured to connect the first electrical power supply circuit and the second electrical power supply circuit, and the charging circuit configured to connect the first electrical power supply circuit and the charging port to which an external charging device is connected, the method includes in the case that the electrical power output from the external charging device is required to be supplied to the first electrical power storage device and the second electrical power storage device, and the difference between the voltage of the first electrical power supply circuit and the voltage of the second electrical power supply circuit is greater than or equal to the predetermined first voltage threshold value, executing the charging control, as the precharging control, on the first electrical power generating device and the second electrical power generating device, the precharging control being the control in which the first electrical power storage device is charged by the electrical power output from the first electrical power generating device and the second electrical power storage device is charged by the electrical power output from the second electrical power generating device, in the case that the electrical power output from the external charging device is required to be supplied to the first electrical power storage device and the second electrical power storage device, and the difference between the voltage of the first electrical power supply circuit and the voltage of the second electrical power supply circuit is greater than or equal to the predetermined first voltage threshold value, executing the connection control on the connection device after executing the precharging control, or in the case that the electrical power output from the external charging device is required to be supplied to the first electrical power storage device and the second electrical power storage device, and the difference between the voltage of the first electrical power supply circuit and the voltage of the second electrical power supply circuit is less than the predetermined first voltage threshold value, executing the connection control on the connection device without executing the precharging control, the connection control being the control for connecting the first electrical power supply circuit and the second electrical power supply circuit via the connection circuit, and executing the external charging control to supply the electrical power output from the external charging device to the first electrical power storage device and the second electrical power storage device. In accordance with this feature, when the first electrical power supply circuit and the second electrical power supply circuit are connected at the time of charging, it is possible to suppress an excessive current from flowing to the electrical power supply system.

## Claims

1. An electrical power supply system (21), comprising:
a first electrical power supply circuit (28a) configured to supply to a first load device (30a) an electrical power output from a first electrical power generating device (24a), the electrical power being a direct current electrical power;
a first electrical power storage device (26a) connected to the first electrical power supply circuit and in parallel with the first electrical power generating device;
a second electrical power supply circuit (28b) configured to supply to a second load device (30b) an electrical power output from a second electrical power generating device (24b), the electrical power being a direct current electrical power;
a second electrical power storage device (26b) connected to the second electrical power supply circuit and in parallel with the second electrical power generating device;
a connection circuit (32a) equipped with a connection device (34a) configured to connect the first electrical power supply circuit and the second electrical power supply circuit;
a charging circuit (40a) configured to connect the first electrical power supply circuit and a charging port (42a) to which an external charging device (46) is connected; and
a control device (48) configured to execute a connection control on the connection device in order to connect the first electrical power supply circuit and the second electrical power supply circuit via the connection circuit,
wherein, in a case that an electrical power output from the external charging device is required to be supplied to the first electrical power storage device and the second electrical power storage device, and a difference between a voltage of the first electrical power supply circuit and a voltage of the second electrical power supply circuit is greater than or equal to a predetermined first voltage threshold value, the control device executes the connection control on the connection device after executing a precharging control on the first electrical power generating device and the second electrical power generating device, the precharging control being a control in which the first electrical power storage device is charged by the electrical power output from the first electrical power generating device and the second electrical power storage device is charged by the electrical power output from the second electrical power generating device.

2. The electrical power supply system according to claim **1,** wherein, in the case that the electrical power output from the external charging device is required to be supplied to the first electrical power storage device and the second electrical power storage device, and the difference between the voltage of the first electrical power supply circuit and the voltage of the second electrical power supply circuit is greater than or equal to the predetermined first voltage threshold value, the control device executes the connection control on the connection device after executing the precharging control on the first electrical power generating device and the second electrical power charging device until the difference between the voltage of the first electrical power supply circuit and the voltage of the second electrical power supply circuit becomes less than a predetermined second voltage threshold value.

3. The electrical power supply system according to claim 1, wherein:
each of the first electrical power generating device and the second electrical power generating device includes an electrical power generator and an internal combustion engine configured to drive the electrical power generator; and
in a case that the internal combustion engine is in an idling state, the control device executes the precharging control on the first electrical power generating device and the second electrical power generating device.

4. The electrical power supply system according to claim 1, wherein:
the charging circuit further comprises a disconnection device (44a) configured to disconnect the charging port from the first electrical power supply circuit; and
in a case that the external charging device is not connected to the charging port, the control device disconnects the charging port from the first electrical power supply circuit by the disconnection device.

5. The electrical power supply system according to claim 1, wherein:
the charging circuit further comprises a disconnection device configured to disconnect the charging port from the first electrical power supply circuit;
in a case that an amount of stored electrical power of the first electrical power storage device becomes greater than or equal to a first predetermined amount of electrical power, and an amount of stored electrical power of the second electrical power storage device becomes greater than or equal to a second predetermined amount of electrical power, the control device disconnects the charging port from the first electrical power supply circuit by the disconnection device.

6. The electrical power supply system according to claim 1, wherein, in a case that the external charging device is detached from the charging port, the control device terminates the connection control on the connection device.

7. A moving object (10) comprising the electrical power supply system according to any one of claims 1 to 6.

8. A method of controlling an electrical power supply system, the electrical power supply system including:
a first electrical power supply circuit configured to supply to a first load device an electrical power output from a first electrical power generating device, the electrical power being a direct current electrical power;
a first electrical power storage device connected to the first electrical power supply circuit and in parallel with the first electrical power generating device;
a second electrical power supply circuit configured to supply to a second load device an electrical power output from a second electrical power generating device, the electrical power being a direct current electrical power;
a second electrical power storage device connected to the second electrical power supply circuit and in parallel with the second electrical power generating device;
a connection circuit equipped with a connection device configured to connect the first electrical power supply circuit and the second electrical power supply circuit; and
a charging circuit configured to connect the first electrical power supply circuit and a charging port to which an external charging device is connected,
the method comprising:
in a case that an electrical power output from the external charging device is required to be supplied to the first electrical power storage device and the second electrical power storage device, and a difference between a voltage of the first electrical power supply circuit and a voltage of the second electrical power supply circuit is greater than or equal to a predetermined first voltage threshold value, executing a charging control, as a precharging control, on the first electrical power generating device and the second electrical power generating device, the precharging control being a control in which the first electrical power storage device is charged by the electrical power output from the first electrical power generating device and the second electrical power storage device is charged by the electrical power output from the second electrical power generating device;
in the case that the electrical power output from the external charging device is required to be supplied to the first electrical power storage device and the second electrical power storage device, and the difference between the voltage of the first electrical power supply circuit and the voltage of the second electrical power supply circuit is greater than or equal to the predetermined first voltage threshold value, executing a connection control on the connection device after executing the precharging control, or in a case that the electrical power output from the external charging device is required to be supplied to the first electrical power storage device and the second electrical power storage device, and the difference between the voltage of the first electrical power supply circuit and the voltage of the second electrical power supply circuit is less than the predetermined first voltage threshold value, executing the connection control on the connection device without executing the precharging control, the connection control being a control for connecting the first electrical power supply circuit and the second electrical power supply circuit via the connection circuit; and
executing an external charging control to supply the electrical power output from the external charging device to the first electrical power storage device and the second electrical power storage device.
